# EUROPÄISCHE PATENTSCHRIFT

(11) **EP 1 423 299 B1**
(45) Veröffentlichungstag und Bekanntmachung des Hinweises auf die Patenterteilung: **12.10.2005**
(21) Anmeldenummer: 02764843.5
(22) Anmeldetag: 10.08.2002
(51) Int. Cl.: B60R 13/00, B23B 27/08, B05D 5/06, B05D 7/00, B05D 7/02, B29C 45/00

(54) **FARB- UND/ODER EFFEKTGEBENDE FOLIEN, VERFAHREN ZU IHRER HERSTELLUNG UND IHRE VERWENDUNG**
COLOR- AND/OR EFFECT-PRODUCING FILMS, METHOD FOR THE PRODUCTION AND USE THEREOF
FEUILLES CONFERANT UNE COULEUR ET/OU UN EFFET, LEUR PROCEDE DE PRODUCTION ET LEUR UTILISATION

(30) Priorität: 16.08.2001 DE 10140205
(43) Veröffentlichungstag der Anmeldung: 02.06.2004
(73) Patentinhaber: BASF Coatings AG, 48165 Münster (DE)
(72) Erfinder: HINTZE-BRÜNING, Horst, 48165 Münster (DE); STRICKMANN, Frank, 48565 Steinfurt (DE); LASSMANN, Walter, 48165 Münster (DE)
(74) Vertreter: Fitzner, Uwe
(86) Internationale Anmeldenummer: PCT/EP2002/008982
(87) Internationale Veröffentlichungsnummer: WO 2003/016095

(56) Entgegenhaltungen:
- EP-A- 0 266 109
- EP-A- 0 949 120
- EP-B- 0 352 298
- EP-B- 0 449 982
- WO-A-00/33975
- WO-A-00/51799
- WO-A-01/26879
- DE-A- 3 636 183
- DE-A- 4 204 518
- DE-A- 4 222 194
- DE-A- 19 538 340
- DE-A- 19 540 977
- DE-A- 19 818 735
- DE-A- 19 835 206
- US-A- 4 810 540
- US-A- 5 026 448
- US-A- 5 114 789
- US-A- 5 985 079

## Beschreibung

Die vorliegende Erfindung betrifft neue farb- und/oder effektgebende Folien. Außerdem betrifft die vorliegende Erfindung ein neues Verfahren zur Herstellung von farb- und/oder effektgebenden Folien. Des weiteren betrifft die vorliegende Erfindung die Verwendung der neuen farb- und/oder effektgebenden Folien zur Beschichtung von dreidimensionalen Formteilen, insbesondere von Kraftfahrzeugkarosserien.

Farb- und/oder effektgebende Lackierungen von Kraftfahrzeugkarosserien, insbesondere PKW-Karosserien, bestehen heute vorzugsweise aus mehreren Lackschichten, die übereinander appliziert werden und unterschiedliche Eigenschaften aufweisen.

Beispielsweise werden nacheinander eine elektrisch abgeschiedene Elektrotauchlackierung (ETL) als Grundierung, eine Füllerlackierung oder Steinschlagschutzgrundierung, eine Basislackierung und eine Klarlackierung auf ein Substrat aufgebracht.

Hierbei dient die ETL insbesondere dem Korrosionsschutz des Blechs. Sie wird von der Fachwelt häufig auch als Grundierung bezeichnet.

Die Füllerlackierung dient der Abdeckung von Unebenheiten des Untergrundes und gewährt aufgrund ihrer Elastizität die Steinschlagbeständigkeit. Gegebenenfalls kann die Füllerlackierung noch zur Verstärkung des Deckvermögens und zur Vertiefung des Farbtons der Lackierung dienen.

Die Basislackierung steuert die Farben und/oder die winkelabhängigen optischen Effekte bei. Dabei können sowohl die Helligkeit (Menge) als auch die Farbe (durch wellenlängenspezifische Absorption oder durch Interferenz) des reflektierten Lichts in Abhängigkeit des Betrachtungswinkels variieren, was auch als Heiligkeits- und/oder Farbflop bezeichnet wird.

Die Klarlackierung dient der Verstärkung der optischen Effekte und dem Schutz der Lackierung vor mechanischer und chemischer Schädigung.

Basislackierung und Klarlackierung werden häufig auch zusammenfassend als Decklackierung bezeichnet. Ergänzend wird noch auf Römpp Lexikon Lacke und Druckfarben, Georg Thieme Verlag, Stuttgart, New York, 1998, Seiten 49 und 51, "Automobillacke" verwiesen.

Nachteilig ist, daß die Applikation dieser farb- und/oder effektgebenden Lackierungen häufig in vier getrennten Schritten erfolgen muß, zwischen denen jeweils abgelüftet sowie ggf. auch eingebrannt werden muß, was zu einem hohen Zeit- und Arbeitsaufwand sowie zu erhöhten Energie- und Anlagekosten führt. Nachteilig ist weiterhin die Umweltbelastung bei Verwendung lösemittelhaltiger Lacke.

Außerdem hat sich in der Praxis herausgestellt, daß insbesondere die Applikationsbedingungen für die Basislacke das Farb- und das Flopverhalten der Basislackierungen stark beeinflussen kann. Gleiches gilt für unterschiedliche Trocknungsbedingungen für die applizierten Basislackschichten, die wegen der Verwendung unterschiedlicher Substrate, wie Kunststoffe und Metalle, eingestellt werden müssen. Diese Faktoren machen in der Praxis aufwendige Maßnahmen zum Farbtonangleich von Bauteilen notwendig, die in einer Karosserie unmittelbar aneinanderstoßen (colour matching).

Um diese Probleme von vornherein zu vermeiden, werden neuerdings farb- und/oder effektgebende mehrschichtige Folien zur Beschichtung von Kraftfahrzeugkarosserien, insbesondere Kraftfahrzeugkarosserieaußenteilen, vorgeschlagen. Diese bekannten farb- und/oder effektgebenden mehrschichtigen Folien können unter gleichbleibenden Bedingungen hergestellt werden und auf beliebige Substrate appliziert werden, wodurch ein substrat- und verfahrensunabhängiger Farbton und/oder optischer Effekt resultiert. Die Applikation kann durch Laminieren auf Metalle, Hinterspritzen mit thermoplastischen Kunststoffen, Hinterschäumen oder Hinterpressen erfolgen. Die entsprechenden Verfahren und Folien sind beispielsweise aus den amerikanischen Patenten US 4,810,540 A, US 4,931,324 A oder US 5,114,789 A, den europäischen Patenten EP 0 266 109 B 1, EP 0 285 071 B 1, EP 0 352 298 B 1 oder EP 0 449 982 B 1, den europäischen Patentanmeldungen EP 0 949 120 A 1, EP 0 261 815 A 1 oder EP 0 050 794 A 1 oder der internationalen Patentanmeldung WO 96/40449 bekannt.

Insbesondere ist aus der europäischen Patentanmeldung EP 0 949 120 A 1 eine farb- und/oder effektgebende mehrschichtige Folie bekannt, bei der sich zwischen der Basislackierung und der Klarlackierung eine sogenannte Anpassungsschicht ("adjustment layer") einer Dicke von 2,5 bis 25 µm befindet, um die Farbe der Basislackierung an einen vorgegebenen Standard anzupassen. Die etwa 25 µm dicke Basislackierung wird durch Extrusion hergestellt, und die Anpassungsschicht wird Hilfe der Drucktechnik aufgebracht. Eine Lösung der Probleme, die mit einem gerichteten Applikationsverfahren, bei dem die Pigmente in einer Vorzugsrichtung ausgerichtet werden, verbunden sind, wird in der Patentanmeldung nicht geboten.

Aus der EP-A-0 266 109 ist ein flexibles dekoratives Folienmaterial zum Einsatz in der Beschichtung von Automobilkarosserieteilen und ähnlichen Substraten bekannt, das eine pigmentierte Beschichtung auf der Unterseite einer äußeren Schicht besitzt, welche durch die äußere Schicht sichtbar ist. Diese pigmentierte Schicht enthält darin einheitlich verteilt reflektierende Flakes, um dem Folienmaterial das Aussehen einer Basislack/Klarlack-Deckschicht zu geben.

Die effektgebende Schicht weist ausschließlich eine anisotrope Anordnung der Pigmente auf. Das bedeutet, dass die optischen Eigenschaften der Folie vom Betrachtungswinkel abhängig sind. Die pigmentierte Schicht wird durch Walzen auftragen. Dies führt zu einer ausschließlich anisotropen Ausrichtung der Pigmente. Bei der aufgesprühten Schicht handelt es sich lediglich um eine weitgehend transparente Schicht, beispielsweise einen Klarlack, d.h., dass hierbei keine Effektpigmente oder deckenden Farbpigmente eingesetzt werden.

Während die geschilderten Vorteile bei einfachen Farbtönen, wie Unifarbtönen, realisiert werden können, ist dies bei anspruchsvollen Effektfarben, wie Metallic-Effekten, nicht der Fall. Weil die bekannten Folien meist über einen gerichteten Prozeß, wie die Extrusion, zu Flachfolien oder das Gießen von flüssigen Basislacken auf Trägerfolien, hergestellt werden, sind der Farbort und das Flopverhalten der farb- und/oder effektgebenden Schichten nicht isotrop, d. h., daß bei einer Betrachtung der Schichten unter verschiedenen Winkeln relativ zur Vorzugsrichtung des Herstellprozesses unterschiedliche Farben und Effekte wahrgenommen werden. Ursache ist eine Orientierung der plättchenförmigen effektgebenden Pigmente, wie plättchenförmige Aluminiumpigmente, die ein Aspektverhältnis >1 aufweisen, in die durch die Herstellung vorgegebene Richtung. Eine weitere Inhomogenität wird durch die statistisch bevorzugte Orientierung der Flächennormalen der plättchenförmigen effektgebenden Pigmente relativ zur Substratebene in der besagten Vorzugsrichtung erzeugt.

Diese nachteiligen Effekte führen bei der Verarbeitung der bekannten farb- und/oder effektgebenden mehrschichtigen Folien zu farblich homogenen Beschichtungen für Kraftfahrzeugkarosserien zu einem erhöhten logistischen Aufwand und zu großen Verschnittmengen, was die Wirtschaftlichkeit der Beschichtungen deutlich schmälert.

Zwar könnte man diese Nachteile dadurch beheben, daß man die farb- und/oder effektgebenden Schichten durch Spritzapplikation von Basislacken herstellt, die üblicherweise isotrope Beschichtungen liefert. Dabei handelt man sich aber aus den folgenden Gründen andere Nachteile ein.

Die bekannten mehrschichtigen farb- und/oder effektgebenden Folien sind insgesamt erheblich dicker als die herkömmlichen farb- und/oder effektgebenden Mehrschichtlackierungen. Insbesondere müssen die farb- und/oder effektgebenden Schichten der Folien mehr als zwei bis viermal dicker sein als die Basislackierungen herkömmlicher Mehrschichtlackierungen, um bei den bei der Beschichtung dreidimensionaler Gegenstände auftretenden Verstreckungen, die mehr als 200% betragen können, ein ausreichend hohes Deckvermögen zu bewahren und eine möglichst geringe Veränderung im Farbton und optischen Effekt zu erleiden.

Eine wirtschaftliche Herstellung dicker, isotroper farb- und/oder effektgebender Schichten durch Spritzapplikation ist aber wegen des vergleichsweise geringen Auftragsraten und den üblicherweise geringen Festkörpergehalten von farb- und/oder effektgebenden Basislacken nicht möglich.

Die vorstehend geschilderten Nachteile treten nicht nur bei der Verwendung von Effektpigmenten auf, die optische Effekte hervorrufen, sondern auch bei elektrisch leitfähigen, magnetisch abschirmenden oder fluoreszierenden Pigmenten.

Aufgabe der vorliegenden Erfindung ist es, neue farb- und/oder effektgebende, ein- oder mehrschichtige Folien bereitzustellen, die in wirtschaftlicher Weise hergestellt werden können und die Nachteile des Standes der Technik nicht mehr länger aufweisen. Insbesondere sollen die neuen, farb- und/oder effektgebenden mehrschichtigen Folien ein isotropes Flopverhalten und einen isotropen Farbort zeigen, die beide unabhängig vom Betrachtungswinkel sind, so daß bei ihrer Verarbeitung zu Beschichtungen für dreidimensionale Gegenstände, insbesondere Kraftfahrzeugkarosserien, keine logistischen Probleme und keine hohen Verschnittmengen mehr auftreten. Die aus den neuen, farb- und/oder effektgebenden ein- oder mehrschichtigen Folien hergestellten neuen Beschichtungen sollen auch in den verstreckten Bereiche nach wie vor ein ausreichend hohes Deckvermögen haben und keine oder nur eine sehr geringe Veränderungen im Farbton und Effekt erleiden. Insgesamt sollen die neuen Beschichtungen, was Glanz, Abbildungsunterscheidbarkeit, Einheitlichkeit des Deckvermögens, gleichmäßige Schichtdicke, Beständigkeit gegenüber Treibstoff, Lösemittel und Säuren, Härte, Abriebfestigkeit, Kratzfestigkeit, Schlagzähigkeit, Haftfestigkeit, Witterungsbeständigkeit und Beständigkeit gegenüber Wasser und Feuchtigkeit betrifft, die sogenannte »Automobilqualität« aufweisen (vgl. hierzu auch das europäische Patent EP 0 352 298 B 1, Seite 15, Zeile 42, bis Seite 17, Zeile 40).

Demgemäß wurden die neuen, farb- und/oder effektgebenden, ein- oder mehrschichtigen Folien gefunden, die mindestens eine färb- und/oder effektgebende Schicht, enthaltend
(1) mindestens eine erste Teilschicht (1), enthaltend mindestens ein farb- und/oder effektgebendes erstes Pigment (1) und
(2) mindestens eine zweite Teilschicht (2), enthaltend das erste Pigment oder die ersten Pigmente (1) und/oder mindestens ein hiervon verschiedenes farb- und/oder effektgebendes zweites Pigment (2),
wobei das erste Pigment (1) oder die ersten Pigmente (1) in der ersten Teilschicht (1) anisotrop und das Pigment oder die Pigmente in der zweiten Teilschicht (2) isotrop angeordnet sind.

Im folgenden werden die neuen, farb- und/oder effektgebenden, ein- oder mehrschichtigen Folien zusammenfassend als »erfindungsgemäße Folien« bezeichnet.

Außerdem wurde das neue Verfahren zur Herstellung farb- und/oder effektgebender, ein- oder mehrschichtiger Folien gefunden, bei dem man
(1) eine Teilmenge oder die Gesamtmenge mindestens eines ersten Basislacks (A) mit Hilfe eines gerichteten Applikationsverfahrens auf einen Träger appliziert, wobei sich die Applikationsvorrichtung (1) und der Träger in relativer Bewegung zueinander befinden und wodurch die erste Teilschicht (1) der farb- und/oder effektgebenden Schicht aufgebaut wird,
(2) einmal oder mindestens zweimal die Restmenge des ersten Basislacks (A) und/oder mindestens eines von dem oder den ersten Basislack(en) (A) verschiedenen zweiten Basislacks (B) auf die im ersten Verfahrensschritt (1) gebildete erste Teilschicht (1) durch mindestens ein Applikationsverfahren (2) zur isotropen Anordnung der Pigmente kontinuierlich appliziert, wobei sich die Applikationsvorrichtung(en) (2) und der Träger in relativer Bewegung zueinander befinden und wodurch die farb- und/oder effektgebende Schicht weiter oder vollständig aufgebaut wird, und
(3) die resultierende farb- und/oder effektgebenden Schicht trocknet oder partiell oder vollständig aushärtet.

Im folgenden wird das neue Verfahren zur Herstellung von farb- und/oder effektgebenden, ein- oder mehrschichtigen Folien als »erfindungsgemäßes Verfahren« bezeichnet.

Im Hinblick auf den Stand der Technik war es überraschend und für den Fachmann nicht vorhersehbar, daß die Aufgabe, die der vorliegenden Erfindung zugrundelag, mit Hilfe der erfindungsgemäßen Folien und des erfindungsgemäßen Verfahrens gelöst werden konnte.

Insbesondere überraschte, daß eine vergleichsweise dünne, isotrope, farb- und/oder effektgebende Schicht mit isotrop angeordneten farb- und/oder effektgebenden Pigmenten auf einer vergleichsweise dicken, anisotropen, farb- und/oder effektgebenden Schicht mit anisotrop angeordneten, d. h. in einer Vorzugsrichtung ausgerichteten, farb- und/oder effektgebenden Pigmenten denselben oder praktisch denselben Farbton und/oder denselben optischen und/oder sonstigen physikalischen Effekt hervorrief, wie eine vollständig isotrope Schicht.

Noch mehr überraschte, daß mit Hilfe des erfindungsgemäßen Verfahrens in einfacher Weise erfindungsgemäße Folien hergestellt werden konnten, die mindestens zwei farb- und/oder effektgebende Schichten unterschiedlicher Farben und/oder Effekte übereinanderliegend enthielten, so daß dekorative und/oder physikalische Effekte hervorgerufen werden können, die ansonsten nur schwer einstellbar waren.

Vor allem aber zeigten die erfindungsgemäßen Folien überraschenderweise ein isotropes Flopverhalten und einen isotropen Farbort, die beide unabhängig vom Betrachtungswinkel waren, so daß bei ihrer Verarbeitung zu Beschichtungen für dreidimensionale Gegenstände, insbesondere Kraftfahrzeugkarosserien, keine logistischen Probleme und keine hohen Verschnittmengen mehr auftraten. Die aus den erfindungsgemäßen Folien hergestellten erfindungsgemäßen Beschichtungen hatten überraschenderweise auch in den verstreckten Bereiche nach wie vor ein ausreichend hohes Deckvermögen.

Insgesamt wiesen die neuen Beschichtungen, was Glanz, Abbildungsunterscheidbarkeit, Einheitlichkeit des Deckvermögens, gleichmäßige Schichtdicke, Beständigkeit gegenüber Treibstoff, Lösemittel und Säuren, Härte, Abriebfestigkeit, Kratzfestigkeit, Schlagzähigkeit, Haftfestigkeit, Witterungsbeständigkeit und Beständigkeit gegenüber Wasser und Feuchtigkeit betraf, die sogenannte »Automobilqualität« auf.

Die erfindungsgemäßen Folien enthalten mindestens eine, insbesondere eine, farb- und/oder effektgebende Schicht oder sie bestehen hieraus.

In speziellen Fällen können die erfindungsgemäßen Folien mindestens zwei, insbesondere zwei, farb- und/oder effektgebende Schichten übereinander liegend enthalten, wobei die obere(n) Schicht(en) die daruntertiegende(n) Schicht(en) vollständig oder partiell, insbesondere partiell, bedeckt oder bedecken. Vorzugsweise ist die partielle Bedeckung bildmäßig ausgestaltet. In dieser Weise können nicht nur unterschiedliche Farben, sondern auch unterschiedliche physikalische und optische Effekte beispielsweise zu Informationszwecken oder Signalzwecken miteinander kombiniert werden.

Die erfindungsgemäßen Folien können in der unterschiedlichsten Art und Weise hergestellt werden; vorzugsweise werden sie mit Hilfe des erfindungsgemäßen Verfahrens erzeugt.

Bei dem erfindungsgemäßen Verfahren wird mindestens ein, insbesondere ein erster Basislack (A) oder mindestens ein, insbesondere ein erster Basislack (A) und mindestens ein, insbesondere ein, von dem ersten Basislack (A) verschiedener zweiter Basislack (B) verwendet.

Die stoffliche Zusammensetzung der Basislacke (A) und (B) ist nicht kritisch, sondern es können die üblichen und bekannten, konventionellen oder wäßrigen Basislacke verwendet werden, wie sie beispielsweise aus dem amerikanischen Patent US 5,114,789 A, Spalte 7, Zeile 41, bis Spalte 8, Zeile 33, Spalte 11, Zeilen 24 bis 50, und Spalte 13, Zeilen 30 bis 40, dem europäischen Patent EP 0 352 298 B 1, Seite 9, Zeile 19, bis Seite 12, Zeile 38, oder den Patentanmeldungen EP 0 089 497 A 1, EP 0 256 540 A 1, EP 0 260 447 A 1, EP 0 297 576 A 1, WO 96/12747, EP 0 523 610 A 1, EP 0 228 003 A 1, EP 0 397 806 A 1, EP 0 574 417 A 1, EP 0 531 510 A 1, EP 0 581 211 A 1, EP 0 708 788 A 1, EP 0 593 454 A 1, DE 43 28 092 A 1, EP 0 299 148 A 1, EP 0 394 737 A 1, EP 0 590 484 A 1, EP 0 234 362 A 1, EP 0 234 361 A 1, EP 0 543 817 A 1, WO 95/14721, EP 0 521 928 A 1, EP 0 522 420 A 1, EP 0 522 419 A 1, EP 0 649 865 A 1, EP 0 536 712 A 1, EP 0 596 460 A 1, EP 0 596 461 A 1, EP 0 584 818 A 1, EP 0 669 356 A 1, EP 0 634 431 A 1, EP 0 678 536 A 1, EP 0 354 261 A 1, EP 0 424 705 A 1, WO 97/49745, WO 97/49747, EP 0 401 565 A 1, EP 0 496 205 A 1, EP 0 358 979 A 1, EP 469 389 A 1, DE 24 46 442 A 1, DE 34 09 080 A 1, DE 195 47 944 A 1, DE 197 41 554 A 1 oder EP 0 817 684, Spalte 5, Zeilen 31 bis 45, bekannt sind.

Wesentlich ist, daß die Basislacke (A) und/oder (B) farb- und/oder effektgebende Pigmente enthalten. Vorzugsweise werden die farb- und/oder effektgebenden Pigmente aus der Gruppe, bestehend aus organischen und anorganischen, farbigen, optisch effektgebenden, elektrisch leitfähigen, magnetisch abschirmenden oder fluoreszierenden Pigmenten, Metallpulvern, organischen und anorganischen, transparenten oder deckenden Füllstoffen oder Nanopartikeln, ausgewählt. Bevorzugt haben die Pigmente ein Aspektverhältnis > 1.

Beispiele geeigneter Effektpigmente sind Metallplättchenpigmente, wie handelsübliche Aluminiumbronzen, gemäß DE 36 36 183 A 1 chromatierte Aluminiumbronzen, und handelsübliche Edelstahlbronzen, sowie nichtmetallische Effektpigmente, wie zum Beispiel Pertglanz- bzw. Interferenzpigmente, plättchenförmige Effektpigmente auf der Basis von Eisenoxid, das einen Farbton von Rosa bis Braunrot aufweist oder flüssigkristalline Effektpigmente. Ergänzend wird auf Römpp Lexikon Lacke und Druckfarben, Georg Thieme Verlag, 1998, Seiten 176, »Effektpigmente« und Seiten 380 und 381 »Metalloxid-Glimmer-Pigmente« bis »Metallpigmente«, und die Patentanmeldungen und Patente DE 36 36 156 A 1, DE 37 18 446 A 1, DE 37 19 804 A 1, DE 39 30 601 A 1, EP 0 068 311 A 1, EP 0 264 843 A 1, EP 0 265 820 A 1, EP 0 283 852 A 1, EP 0 293 746 A 1, EP 0 417 567 A 1, US 4,828,826 A oder US 5,244,649 A verwiesen.

Beispiele für geeignete anorganische farbgebende Pigmente sind Weißpigmente wie Titandioxid, Zinkweiß, Zinksulfid oder Lithopone; Schwarzpigmente wie Ruß, Eisen-Mangan-Schwarz oder Spinellschwarz; Buntpigmente wie Chromoxid, Chromoxidhydratgrün, Kobaltgrün oder Ultramaringrün, Kobaltblau, Ultramarinblau oder Manganblau, Ultramarinviolett oder Kobalt- und Manganviolett, Eisenoxidrot, Cadmiumsulfoselenid, Molybdatrot oder Ultramarinrot; Eisenoxidbraun, Mischbraun, Spinell- und Korundphasen oder Chromorange; oder Eisenoxidgelb, Nickeltitangelb, Chromtitangelb, Cadmiumsulfid, Cadmiumzinksulfid, Chromgelb oder Bismutvanadat.

Beispiele für geeignete organische farbgebende Pigmente sind Monoazopigmente, Bisazopigmente, Anthrachinonpigmente, Benzimidazolpigmente, Chinacridonpigmente, Chinophthalonpigmente, Diketopyrrolopyrrolpigmente, Dioxazinpigmente, Indanthronpigmente, Isoindolinpigmente, Isoindolinonpigmente, Azomethinpigmente, Thioindigopigmente, Metallkomplexpigmente, Perinonpigmente, Perylenpigmente, Phthalocyaninpigmente oder Anilinschwarz.

Ergänzend wird auf Römpp Lexikon Lacke und Druckfarben, Georg Thieme Verlag, 1998, Seiten 180 und 181, »Eisenblau-Pigmente« bis »Eisenoxidschwarz«, Seiten 451 bis 453 »Pigmente« bis »Pigmenivolumenkonzentration«, Seite 563 »Thioindigo-Pigmente«, Seite 567 »Titandioxid-Pigmente«, Seiten 400 und 467, »Natürlich vorkommende Pigmente«, Seite 459 »Polycyclische Pigmente«, Seite 52, »Azomethin-Pigmente«, »Azopigmente«, und Seite 379, »Metallkomplex-Pigmente«, verwiesen.

Beispiele für fluoreszierende Pigmente (Tagesleuchtpigmente) sind Bis(azomethin)-Pigmente.

Beispiele für geeignete elektrisch leitfähige Pigmente sind Titandioxid/Zinnoxid-Pigmente.

Beispiele für magnetisch abschirmende Pigmente sind Pigmente auf der Basis von Eisenoxiden oder Chromdioxid.

Beispiele für geeignete Metallpulver sind Pulver aus Metallen und Metallegierungen Aluminium, Zink, Kupfer, Bronze oder Messing.

Beispiele geeigneter organischer und anorganischer Füllstoffe sind Kreide, Calciumsulfate, Bariumsulfat, Silikate wie Talkum, Glimmer oder Kaolin, Kieselsäuren, Oxide wie Aluminiumhydroxid oder Magnesiumhydroxid oder organische Füllstoffe wie Kunststoffpulver, insbesondere aus Poylamid, Polyvinylidendifluorid (PVDF) oder Polyacrlynitril. Ergänzend wird auf Römpp Lexikon Lacke und Druckfarben, Georg Thieme Verlag, 1998, Seiten 250 ff., »Füllstoffe«, verwiesen.

Vorzugsweise werden Glimmer und Talkum angewandt, wenn die Kratzfestigkeit der aus den Basislacken hergestellten farb- und/oder effektgebenden Schichten verbessert werden soll.

Außerdem ist es von Vorteil, Gemische von plättchenförmigen anorganischen Füllstoffen wie Talk oder Glimmer und nichtplättchenförmigen anorganischen Füllstoffen wie Kreide, Dolomit Calciumsulfate, oder Bariumsulfat zu verwenden, weil hierdurch die Viskosität und das Fließverhalten sehr gut eingestellt werden können.

Beispiele geeigneter transparenter Füllstoffe sind solche auf der Basis von Siliziumdioxid, Aluminiumoxid oder Zirkoniumoxid.

Geeignete Nanopartikel werden ausgewählt aus der Gruppe, bestehend aus hydrophilen und hydrophoben, insbesondere hydrophilen, Nanopartikeln auf der Basis von Siliziumdioxid, Aluminiumoxid, Zinkoxid, Zirkoniumoxid und der Polysäuren und Heteropolysäuren von Übergangsmetallen, vorzugsweise von Molybdän und Wolfram, mit einer Primärartikelgröße < 50 nm, bevorzugt 5 bis 50 nm, insbesondere 10 bis 30 nm. Vorzugsweise haben die hydrophilen Nanopartikel keinen Mattierungseffekt. Besonders bevorzugt werden Nanopartikel auf der Basis von Sitiziumdioxid verwendet.

Ganz besonders bevorzugt werden hydrophile pyrogene Siliziumdioxide verwendet, deren Agglomerate und Aggregate eine kettenförmige Struktur haben und die durch die Flammenhydrolyse von Siliziumtetrachlorid in einer Knallgasflamme herstellbar sind. Diese werden beispielweise von der Firma Degussa unter der Marke Aerosil ® vertrieben. Ganz besonders bevorzugt werden auch gefällte Wassergläser, wie Nanohektorite, die beispielsweise von der Firma Südchemie unter der Marke Optigel ® oder von der Firma Laporte unter der Marke Laponite ® vertrieben werden, verwendet.

Die in den ersten und zweiten Teilschichten (1) und (2) enthaltenen ersten und zweiten Pigmente (1) und (2) können stofflich identisch oder voneinander verschieden sein.

Nach dem erfindungsgemäßen Verfahren wird eine Teilmenge oder die Gesamtmenge mindestens eines, insbesondere eines ersten Basislacks (A) im ersten Verfahrensschritt (1) mit Hilfe eines gerichteten Applikationsverfahrens (1) auf einen Träger appliziert.

Dabei befinden sich die Applikationsvorrichtung (1) und der Träger in relativer Bewegung zueinander. Vorzugsweise ist die Applikationsvorrichtung (1) stationär, und der Träger wird mit einer geeigneten gleichmäßigen Vorschubgeschwindigkeit, die von den Erfordernissen des Einzelfalls abhängt und vom Fachmann leicht eingestellt werden kann, unter oder über, vorzugsweise unter, der Applikationsvorrichtung (1) vorbeigeführt.

Im Rahmen der vorliegenden Erfindung ist unter einem gerichteten Applikationsverfahren ein Verfahren zu verstehen, das eine gewisse Orientierung oder Vorzugsrichtung der vorstehend beschriebenen Pigmente in den Basislackschichten hervorruft, die zu Inhomogenitäten und Anisotropien in den farb- und/oder effektgebenden Schichten führen. Andererseits weisen aber diese gerichteten Applikationsverfahren den wesentlichen Vorteil auf, daß mit ihrer Hilfe problemlos vergleichsweise dicke Schichten hergestellt werden können.

Beispiele geeigneter gerichteter Applikationsverfahren sind Gießen, Rakeln, Aufwalzen oder Extrusionsbeschichten. Diese können mit üblichen und bekannten Vorrichtungen, wie Gießvorrichtungen, Rakel, Walzen, insbesondere gegenläufig drehende Walzen, oder Extruder, insbesondere Folienextruder, durchgeführt werden.

Im ersten Verfahrensschritt (1) wird vorzugsweise der größte Teil (1) der farb- und/oder effektgebenden Schicht (2) aufgebaut. D. h., daß die gebildete erste Teilschicht (1) vorzugsweise mehr als 50%, bevorzugt mehr als 60%, besonders bevorzugt mehr als 65%,ganz besonders bevorzugt mehr als 70% und insbesondere mehr als 75% der Trockenschichtdicke der farb- und/oder effektgebenden Schicht hat.

Im ersten Verfahrensschritt (1) wird eine Teilmenge des ersten Basislacks (A) auf einen Träger appliziert. Wird im zweiten Verfahrensschritt (2) ein von dem ersten Basislack (A) verschiedener zweiter Basislacks (B) appliziert, kann im ersten Verfahrensschritt (1) die Gesamtmenge des ersten Basislacks (A) aufgetragen werden.

Der Träger kann permanent oder temporär sein.

Wird ein temporärer Träger verwendet, werden die erfindungsgemäßen Folien nach ihrer Herstellung hiervon abgezogen, wonach sie als einschichtige erfindungsgemäße Folien verwendet oder mit anderen Schichten oder Folien zu mehrschichtigen erfindungsgemäße Folien verbunden werden können.

Bei den temporären Trägem kann es sich um umlaufende Metallbänder oder Kunststoffbänder oder um temporäre Trägerfolien, die ggf. mit einer Antihaftschicht ausgerüstet sind, handeln. Beispiele geeigneter temporärer Trägerfolien, insbesondere auf der Basis von Polyester, sind aus dem europäischen Patent EP 0 352 298 B 1, Seite 7, Zeilen 31 bis 49, bekannt.

Wird ein permanenter Träger verwendet, bleiben die erfindungsgemäßen Folien nach ihrer Herstellung haftfest mit diesem verbunden.

Vorzugsweise handelt es sich bei den permanenten Trägern um Kunststoffolien, die in den erfindungsgemäßen Folien eine technische Funktion übernehmen. Vorzugsweise handelt es sich bei den Kunststoffolien um Klarlackfolien, Haftfolien oder vergleichsweise dicke, thermoformbare Trägerfolien, wie sie beispielsweise aus dem europäischen Patent EP 0 352 298 B 1, Seite 7, Zeile 54, bis Seite 10, Zeile 51, und Seite 12, Zeile 55, bis Seite 13, Zeile 53, oder dem amerikanischen Patent US 4,810,540 A, Spalte 3, Zeile 37, bis Spalte 5, Zeile 15, bekannt sind. Vorzugsweise sind die als permanente Träger verwendeten Kunststoffolien thermoplastisch. Sie können fest oder noch nicht vollständig verfestigt sein und sich erst nach der Applikation der ersten Teilschicht (1) oder der farb- und/oder effektgebenden Schicht (2) verfestigen, wodurch eine besonders hohe Zwischenschichthaftung im Verbund resultiert. Die Kunststoffolien können auch pigmentiert sein, insbesondere zur Anpassung an die Helligkeit der der farb- und/oder effektgebenden Schicht (2).

Bei dem erfindungsgemäßen Verfahren wird nach dem Abschluß des ersten Verfahrensschritts (1) im zweiten Verfahrensschritt (2) die Restmenge des ersten Basislacks (A) und/oder der vom ersten Basislack (A) verschiedene zweite Basislack (B) auf die erste Teilschicht (1) aufgetragen. Bevorzugt wird im zweiten Verfahrensschritt (2) die Restmenge des ersten Basislacks (A) appliziert.

Das Auftragen des ersten Basislacks (A) und/oder des zweiten Basislacks (B) erfolgt durch einmalige oder mindestens zweimalige kontinuierliche Applikation.

Wird die einmalige kontinuierliche Applikation angewandt, wird im ersten und einzigen zweiten Verfahrenschritt (2) die farb- und/oder effektgebende Schicht vollständig aufgebaut.

Wird die mindestens zweimalige kontinuierliche Applikation angewandt, erfolgt im zweiten Verfahrenschritt (2) der weitere Aufbau der farb- und/oder effektgebenden Schicht, wodurch ein Verbund aus Träger, erster Teilschicht (1) und zweiter Teilschicht (2) resultiert. Der vollständige Aufbau erfolgt dann in mindestens einem weiteren zweiten Verfahrensschritt (2).

Bei dem zweiten Verfahrensschritt (2) wird mindestens ein Applikationsverfahren (2) angewandt, das in der resultierenden zweiten Teilschicht (2) keine Anordnung der vorstehend beschriebenen Pigmente in einer Vorzugsrichtung, d. h. eine Anisotropie, hervorruft.

Gemäß einer ersten bevorzugten Variante des erfindungsgemäßen Verfahrens wird der Verfahrenschritt oder werden die zweiten Verfahrensschritte (2) zeitlich unmittelbar nach dem ersten Verfahrensschritt (1), d. h. simultan mit dem ersten Verfahrensschritt (1), durchgeführt.

Gemäß einer zweiten bevorzugten Variante des erfindungsgemäßen Verfahrens wird der Verfahrensschritt oder werden die zweiten Verfahrensschritte (2) zeitlich später nach dem erfindungsgemäßen ersten Verfahrenschritt (1), d. h. sequentiell, durchgeführt. In diesem Fall kann die erste Teilschicht (1) getrocknet oder partiell oder vollständig gehärtet werden. Vorzugsweise wird der Verbund aus Träger und erster Teilschicht (1) aus auf Rollen aufgewickelt und bis Durchführung des zweiten Verfahrensschritts (2) in dieser Form gelagert. Hierbei ist es von Vorteil, auf die erste Teilschicht (1) eine Antihaftschicht, vorzugsweise eine Antihaftfolie, aufzutragen.

Vorzugsweise wird die erste Teilschicht (1) zwischen den beiden ersten und zweiten Verfahrensschritten (1) und (2) abgelüftet.

Dies wird vorzugsweise dadurch bewerkstelligt, daß bei der simultanen Variante des erfindungsgemäßen Verfahrens zwischen der Applikationsvorrichtung (1) des ersten Verfahrensschritts (1) und der oder den Applikationsvorrichtung(en) (2) des Verfahrensschritts oder der zweiten Verfahrensschritte (2) ein mehr oder weniger großer räumlicher Abstand herrscht. Der räumliche Abstand richtet sich nach dem Abdunstverhalten der ersten Teilschicht (1) und kann daher vom Fachmann aufgrund seines allgemeinen Fachwissens, ggf. unter Zuhilfenahme einfacher orientierender Versuche eingestellt werden.

Bei der sequentiellen Variante des erfindungsgemäßen Verfahrens wird die Ablüftung vorzugsweise dadurch bewerkstelligt, daß zwischen dem ersten Verfahrensschritt (1) und dem zweiten Verfahrensschritt (2) oder dem zweiten Verfahrensschritt (2) ein mehr oder weniger langer zeitlicher Abstand herrscht. Auch der zeitliche Abstand richtet sich nach dem Abdunstverhalten der ersten Teilschicht (1) und kann daher vom Fachmann aufgrund seines allgemeinen Fachwissens ggf. unter Zuhilfenahme einfacher orientierender Versuche eingestellt werden.

Insgesamt ist es vorteilhaft, wenn die erste Teilschicht (1) nach dem Ablüften noch nicht vollständig getrocknet ist, sondern noch immer einen gewissen Restgehalt an Feuchtigkeit und/oder organischen Lösemitteln aufweist.

Im zweiten Verfahrensschritt (2) werden die Basislacke (A) und/oder (B) kontinuierlich durch mindestens ein Applikationsverfahren (2) auf die im ersten Verfahrensschritt (1) hergestellte erste Teilschicht (1) aufgetragen. Dabei ruft das Applikationsverfahren (2) in der resultierenden zweiten Teilschicht (2) keine Anordnung der vorstehend beschriebenen Pigmente in einer Vorzugsrichtung hervor, d.h. die Pigmente sind isotrop verteilt. Bei der Applikation befinden sich die Applikationsvorrichtung(en) (2) und der Träger mit der ersten Teilschicht (1) sowie ggf. der zweiten Teilschicht (2) in relativer Bewegung zueinander. Die Verbunde aus Träger und erster Teilschicht (1) sowie ggf. zweiter Teilschicht (2) können unter oder über, vorzugsweise unter, der oder den Applikationsvorrichtungen (2) in relativer Bewegung vorbeigeführt werden.

Die Applikation der Basislacke (A) und/oder (B) kann einmal erfolgen, wodurch die vollständige farb- und/oder effektgebende Schicht resultiert. Der Auftrag kann aber auch in mindestens zweimal, d.h. in mindestens zwei Teilschritten (2) erfolgen, wobei im ersten Teilschritt (2) ein weiterer Aufbau der farb- und/oder effektgebenden Schicht erfolgt, der in mindestens einem weiteren Teilschritt (2) abgeschlossen wird.

Die Applikation mindestens einer weiteren zweiten Teilschicht (2) kann simultan oder sequentiell durchgeführt werden. Wird sie sequentiell durchgeführt, wird der Verbund aus Träger, erster Teilschicht (1) und zweiter Teilschicht (2) für die Lagerung bis zur Durchführung des zweiten Teilschritts (2) vorzugsweise auf Rollen aufgewickelt.

Vorzugsweise sind die Applikationsverfahren (2) Spritzapplikationsverfahren und die Applikationsvorrichtungen (2) Spritzapplikationsvorrichtungen. Dabei kann es sich um pneumatische Spritzvorrichtungen (2) (vgl. Römpp Lexikon Lacke und Druckfarben, Georg Thieme Verlag, Stuttgart, New York, 1998, Seite 165, "Druckluftspritzen") oder um elektrostatische Spritzvorrichtungen (2) (vgl. Römpp Lexikon Lacke und Druckfarben, Georg Thieme Verlag, Stuttgart, New York, 1998, Seite 186: »Elektrostatische Lackierung«, Seite 187: »Elektrostatische Sprühpistolen«, »Elektrostatisches Sprühen«) handeln.

Bei der simultanen Applikation der ersten Teilschicht (1) und der zweiten Teilschicht (2) bzw. der zweiten Teilschicht (2) ist oder sind die Applikationsvorrichtung(en) (2) unmittelbar hinter der oder den Applikationsvorrichtung(en) (1) angeordnet. Bei der sequentiellen Applikation ist oder sind die Applikationsvorrichtung(en) (2) vorzugsweise Bestandteil(e) einer weiteren Anlage, der die Verbunde aus Träger und erster Teilschicht (1) sowie ggf. zweiter Teilschicht (2) vorzugsweise in der Form von aufgewickelten Rollen zugeführt werden.

Unabhängig davon, welche Variante des erfindungsgemäßen Verfahrens durchgeführt wird, kann oder können die Applikationsvorrichtung(en) (2) stationär angeordnet sein. Vorzugsweise überspannen sie die Verbunde aus Träger und erster Teilschicht (1) sowie ggf. zweiter Teilschicht (2) in ihrer gesamten Breite. Sie kann oder können quer zur Bewegungsrichtung oder schräg hierzu angeordnet sein. Der Winkel zwischen dem Rand eines Verbunds und der Hauptachse einer Applikationsvorrichtung (2) kann stumpf bis spitz sein.

Werden mindestens zwei Applikationsvorrichtungen (2) verwendet, können sie hintereinander angeordnet sein. Dabei können sie parallel oder schräg zueinander stehen. Die mindestens zwei Applikationsvorrichtungen (2) können sich aber auch unter stumpfen bis spitzen Winkeln überkreuzen.

Vorzugsweise enthält eine stationäre Applikationsvorrichtung (2) mindestens zwei Vorrichtungen zur Applikation der Basislacke (A) oder (B), insbesondere mindestens zwei pneumatisch oder elektrostatisch betriebene Sprühköpfe mit jeweils mindestens einer Sprühdüse.

Die Applikationsvorrichtung(en) (2) kann oder können aber auch quer und/oder schräg zur Bewegungsrichtung der Verbunde aus Träger und erster Teilschicht (1) sowie ggf. zweiter Teilschicht (2) hin und her beweglich angeordnet sein. Vorzugsweise enthalten die beweglichen Applikationsvorrichtungen (2) mindestens eine Vorrichtung zur Applikation der Basislacke (A) oder (B) insbesondere mindestens einen pneumatisch oder elektrostatisch betriebenen Sprühköpfe mit jeweils mindestens einer Sprühdüse.

Die stationären und beweglichen Applikationsvorrichtungen (2) können im Rahmen des erfindungsgemäßen Verfahrens miteinander kombiniert werden. Außerdem können sie in der Vertikalen beweglich sein.

Mit Hilfe der Applikationsvorrichtungen (2) können die Basislacke (A) und/oder (B) senkrecht oder unter einem spitzen bis stumpfen Winkel schräg zur Ebene des Verbunds aus Träger und ersten Teilschicht (1) sowie ggf. zweiten Teilschicht (2) appliziert werden. Dabei können sie in oder entgegen der Bewegungsrichtung des Verbunds appliziert werden. Im Rahmen des erfindungsgemäßen Verfahrens können diese Maßnahmen miteinander kombiniert werden.

Die von den bevorzugt eingesetzten Spritzapplikationsvorrichtungen (2) erzeugten Basislacksprühstrahlen können überlappen. Dabei können sich ihre Auftreffflächen partiell oder vollständig überdecken. Die Überlappung kann beispielsweise dadurch erzielt werden, daß man mindestens zwei Basislacksprühstrahlen unter einem spitzen bis stumpfen Winkel gegeneinander sprüht. Überlappende Basislacksprühstrahlen können aber auch mit Hilfe von Sprühköpfen erzeugt werden, die mindestens zwei Sprühdüsen in konkaver oder konvexer Anordnung enthalten, wie sie beispielsweise aus den Patentanmeldungen und Patenten DE 195 38 340 A 1, WO 97/14506, US 4,378,386 A oder US 5,366,162 A bekannt sind.

Die Isotropie der zweiten Teilschichten (2) kann in vielen Fälle weiter verbessert werden, wenn die pneumatisch erzeugten Sprühstrahlen - oder genauer: die erzeugten Sprühstrahlwolken - relativ zur Sprührichtung und relativ zur ersten Teilschicht (1) in eine periodische, d.h. sich regelmäßig wiederholende, Bewegung versetzt werden.

Dabei kommen beliebige periodische Bewegungen der Sprühstrahlwolke in Betracht. Beispiele gut geeigneter periodischer Bewegungen sind
- die kreisförmige oder exzentrische Rotation der Sprühstrahlwolke um ihre Fortbewegungsrichtung, wodurch eine spiralförmige Fortbewegung des Lackmaterials resultiert,
- die wellenförmige Fortbewegung des Lackmaterials, beispielsweise in Form einer Sinuswelle, oder
- die pulsierende Fortbewegung des Lackmaterials, bei der in der Sprühstrahlwolke, in Sprührichtung gesehen, lackmaterialreiche Bereiche und lackmaterialarme Bereiche periodisch abwechseln.

Diese periodischen Bewegungen können in beliebiger Weise mit einander kombiniert werden, so daß sich mindestens zwei von ihnen überlagern.

Um diese periodischen Bewegungen zu erzeugen, werden die üblichen und bekannten Vorrichtungen für das Druckluftspritzen, insbesondere die Sprühpistolen, in geeigneter Weise modifiziert, indem man sie mit beweglichen Sprühdüsen ausstattet. So werden vorzugsweise rotierende Sprühdüsen, Sprühdüsen, die sich in Sprührichtung gesehen periodisch vor- und zurückbewegen, oder Sprühdüsen in Exzenterscheiben, verwendet. Zu Zwecken der Überlagerung von Bewegungsformen können Konstruktionsprinzipien in geeigneter Weise mit einander kombiniert werden. Beispielsweise können rotierende Sprühdüsen so gelagert werden, daß sie auch noch periodisch vor- und zurückbewegt werden können. Die Konstruktion dieser Sprühpistolen weist keine Besonderheiten auf, sondern es werden die Konstruktionsprinzipien, Materialien und Meß- und Regeltechniken angewandt, wie sie auf dem Gebiet sich bewegender Sprühdüsen üblich und bekannt sind.

Die Frequenz, die Geschwindigkeit und/oder die räumliche Ausdehnung oder Auslenkung der periodischen Bewegung, die sich der fortbewegenden Sprühstrahlwolke erfindungsgemäß überlagert, kann sehr breit variieren und richtet sich nach den Erfordernissen des Einzelfalls. Der Fachmann kann die jeweils optimalen Bedingungen gegebenenfalls anhand einfacher Vorversuche ermitteln.

Durch den Verfahrenschritt oder die zweiten Verfahrensschritte (2) wird die farb- und/oder effektgebende Schicht vollständig aufgebaut. Ihre Naßschichtdicke kann breit variieren und richtet sich insbesondere nach der Trockenschichtdicke, die ein ausreichendes Deckvermögen der farb- und/oder effektgebenden Schicht in der erfindungsgemäßen Beschichtung gewährleistet. Der Fachmann kann daher im Einzelfall die geeignete Naßschichtdicke aufgrund seines allgemeinen Fachwissens gegebenenfalls unter Zuhilfenahme einfacher Vorversuche festlegen.

Die farb- und/oder effektgebenden Schicht wird anschließend getrocknet oder partiell oder vollständig gehärtet. Vorzugsweise wird sie getrocknet. Zur Trocknung können übliche und bekannte Methoden, wie Bestrahlung mit IR- oder Mikrowellenstrahlung oder die Behandlung mit Warmluft im Gegenstrom angewandt werden.

Nach der Trocknung können die resultierenden erfindungsgemäßen Folien bis zur weiteren Verwendung auf Rollen aufgewickelt werden.

Enthalten die erfindungsgemäßen Folien als permanente Träger die vorstehend beschriebenen Klarlackfolien, können ihre farb- und/oder effektgebenden Schichten vor ihrer Verwendung zur Herstellung von Beschichtungen auf ihrer der Klarlackfolie abgewandten Seite mit einer der vorstehend beschriebenen vergleichsweise dicken, thermoformbaren Trägerfolie und/oder einer Haftfolie versehen werden.

Enthalten die erfindungsgemäßen Folien als permanente Träger bereits die vorstehend beschriebenen vergleichsweise dicken, thermoformbaren Trägerfolien, können ihre farb- und/oder effektgebende Schichten vor ihrer Verwendung zur Herstellung von Beschichtungen auf ihrer der thermoformbaren Trägerfolie abgewandten Seite mit einer der vorstehend beschriebenen Klarlackfolien oder mit einer Klarlackierungen versehen werden. Zwischen der farb- und/oder effektgebenden Schicht und der Klarlackierung kann sich noch eine Anpassungsschicht befinden, wie sie beispielsweise in der europäischen Patentanmeldung EP 0 949 120 A 1 beschrieben wird.

Die erfindungsgemäße Folie kann aber auch einen Aufbau haben, der dem der üblichen und bekannten Automobillackierung aus Elektrotauchlackierung oder Korrosionsschutzschicht, gegebenenfalls Füllerlackierung oder Steinschlagschutzgrundierung, Basislackierung und Klarlackierung (Automobilaufbau) entspricht.

Als Klarlacke zur Herstellung der Klarlackierungen kommen alle üblichen und bekannten Einkomponenten(1K)-, Zweikomponenten(2K)- oder Mehrkomponenten(3K, 4K)-Klarlacke, Pulverklarlacke, Pulverslurry-Klarlacke oder UV-härtbaren Klarlacke in Betracht.

Thermisch härtbare Einkomponenten(1K)-, Zweikomponenten(2K)- oder Mehrkomponenten(3K, 4K)-Klarlacke sind aus den europäischen Patentanmeldungen DE 42 04 518 A 1, 0 594 068 A 1, 0 594 071 A 1, 0 594 142 A 1, 0 604 992 A 1 oder 0 596 460 A 1 den internationalen Patentanmeldungen WO 94/10211, WO 94/10212, WO 94/10213, WO 94/22969 oder WO 92/22615 oder den amerikanischen Patentschriften US 5,474,811 A, 5,356,669 A oder 5,605,965 A bekannt.

Einkomponenten(1K)-Klarlacke enthalten bekanntermaßen hydroxylgruppenhaltige Bindemittel und Vernetzungsmittel wie blockierte Polyisocyanate, Tris(alkoxycarbonylamino)triazine und/oder Aminoplastharze. In einer weiteren Variante enthalten sie als Bindemittel Polymere mit seitenständigen Carbamat- und/oder Allophanatgruppen und carbamat- und/oder allophanatmodifizerte Aminoplastharze als Vernetzungsmittel (vgl. die amerikanischen Patentschriften US 5,474,811 A, 5,356,669 A oder 5,605,965 A 1, die internationalen Patentanmeldungen WO 94/10211, WO 94/10212 oder WO 94/10213 oder die europäischen Patentanmeldungen EP 0 594 068 A 1, 0 594 071 A 1 oder 0 594 142 A 1).

Zweikomponenten(2K)- oder Mehrkomponenten(3K, 4K)-Klarlacke enthalten als wesentliche Bestandteile bekanntermaßen hydroxylgruppenhaltige Bindemittel und Polyisocyanate als Vernetzungsmittel, welche bis zu ihrer Verwendung getrennt gelagert werden.

Thermisch härtbare Pulverklarlacke sind beispielsweise aus der deutschen Patentanmeldung DE 42 22 194 A 1, der Produkt-Information der Firma BASF Lacke + Farben AG, "Pulverlacke", 1990 oder der Firmenschrift von BASF Coatings AG "Pulverlacke, Pulverlacke für industrielle Anwendungen", Januar 2000, bekannt.

Pulverklarlacke enthalten als wesentliche Bestandteile bekanntermaßen epoxidgruppenhaltige Bindemittel und Polycarbonsäuren als Vernetzungsmittel.

Beispiele geeigneter Pulverslurry-Klarlacke sind aus der US-Patentschrift US 4,268,542 A 1 und den Patentanmeldungen DE 195 40 977 A 1, DE 195 18 392 A 1, DE 196 17 086 A 1, DE 196 13 547 A 1, EP 0 652 264 A 1, DE 196 18 657 A 1, DE 196 52 813 A 1, DE 196 17 086 A 1 oder DE 198 14 471 A 1 bekannt.

Pulverslurry-Klarlacke enthalten bekanntermaßen Pulverklarlacke in einem wäßrigen Medium dispergiert.

Mit aktinischer Strahlung härtbare Klarlacke, Pulverklarlacke uhd Pulverslurry-Klarlacke gehen beispielsweise aus den europäischen Patentanmeldungen EP 0 EP 928 800 A 1, EP 0 636 669 A 1, EP 0 410 242 A 1, EP 0 783 534 A 1, EP 0 650 978 A 1, EP 0 650 979 A 1, EP 0 650 985 A 1, EP 0 540 884 A 1, EP 0 568 967 A 1, EP 0 054 505 A 1 oder EP 0 002 866 A 1, den deutschen Patentanmeldungen DE 198 35 206 A 1, DE 197 09 467 A 1, DE 42 03 278 A 1, DE 33 16 593 A 1, DE 38 36 370 A 1, DE 24 36 186 A 1 oder DE 20 03 579 B 1, den internationalen Patentanmeldungen WO 97/46549 oder WO 99/14254 oder den amerikanischen Patentschriften US 5,824,373 A, US 4,675,234 A, US 4,634,602 A, US 4,424,252 A, US 4,208,313 A, US 4,163,810 A, US 4,129,488 A, US 4,064,161 A oder US 3,974,303 A hervor.

Thermisch und mit aktinischer Strahlung härtbare Klarlacke, Pulverklarlacke und Pulverslurry-Klarlacke gehen beispielsweise aus den Patentanmeldungen DE 198 18 735 A 1, WO 98/40170, DE 199 08 013 A 1, DE 199 08 018 A 1, EP 0 844 286 A 1 oder EP 0 928 800 A 1 hervor.

Im allgemeinen werden die Klarlacke in einer Naßschichtdicke appliziert, daß nach ihrer Aushärtung Klarlackierungen mit der für ihre Funktionen notwendigen und vorteilhaften Schichtdicken resultieren. Vorzugsweise liegen sie bei 10 bis 100, vorzugsweise 15 bis 80, besonders bevorzugt 20 bis 75 und insbesondere 25 bis 70 µm.

Nach der Applikation werden die farb- und/oder effektgebenden Schichten (2) gemeinsam mit den Klarlackschichten thermisch oder thermisch und mit aktinischer Strahlung gehärtet.

Die Aushärtung kann nach einer gewissen Ruhezeit oder Ablüftzeit erfolgen. Sie kann eine Dauer von 30 s bis 2 h, vorzugsweise 1 min bis 1 h und insbesondere 1 min bis 45 min haben. Die Ruhezeit dient beispielsweise zum Verlauf und zur Entgasung der Schichten und zum Verdunsten von flüchtigen Bestandteilen wie gegebenenfalls noch vorhandenem Lösemittel und/oder Wasser.

Vorzugsweise wird bei der Härtung mit aktinischer Strahlung eine Dosis von 1.000 bis 2.000, bevorzugt 1.100 bis 1.900, besonders bevorzugt 1.200 bis 1.800, ganz besonders bevorzugt 1.300 bis 1.700 und insbesondere 1.400 bis 1.600 mJ/cm² angewandt. Gegebenenfalls kann diese Härtung mit aktinischer Strahlung von anderen Strahlenquellen ergänzt werden. Im Falle von Elektronenstrahlen wird vorzugsweise unter Inertgasatmosphäre gearbeitet. Dies kann beispielsweise durch Zuführen von Kohlendioxid und/oder Stickstoff direkt an die Oberfläche der Klarlackschicht gewährleistet werden. Auch im Falle der Härtung mit UV-Strahlung kann, um die Bildung von Ozon zu vermeiden, unter Inertgas gearbeitet werden.

Für die Härtung mit aktinischer Strahlung werden die üblichen und bekannten Strahlenquellen und optischen Hilfsmaßnahmen angewandt. Beispiele geeigneter Strahlenquellen sind Blitzlampen der Firma VISIT, Quecksilberhoch- oder -niederdruckdampflampen, welche gegebenenfalls mit Blei dotiert sind, um ein Strahlenfenster bis zu 405 nm zu öffnen, oder Elektronenstrahlquellen.

Auch die thermische Härtung weist keine methodischen Besonderheiten auf, sondern erfolgt nach den üblichen und bekannten Methoden wie Erhitzen in einem Umluftofen im Gegenstrom oder Bestrahlen mit IR- und/oder NIR-Lampen. Vorteilhafterweise erfolgt die thermische Härtung bei Temperaturen über 90 °C. Die maximalen Härtungstemperaturen sind dabei abhängig von der Wärmeformbeständigkeit des Träger oder der Trägerfolie.

Die erfindungsgemäßen Folien, insbesondere die nach dem erfindungsgemäßen Verfahren hergestellten, enthalten
(1) mindestens eine, insbesondere eine erste Teilschicht (1), enthaltend mindestens ein farb- und/oder effektgebendes erstes Pigment (1) in anisotroper Verteilung, und
(2) mindestens eine, insbesondere eine zweite Teilschicht (2), enthaltend das Pigment oder die ersten Pigmente (1) und/oder mindestens ein hiervon verschiedenes farb- und/oder effektgebendes zweites Pigment (2) in isotroper Verteilung;
oder bestehen hieraus.

Die erfindungsgemäßen Folien sind hervorragend zur Herstellung von dekorativen und/oder schützenden Beschichtungen von Kraftfahrzeugkarosserien und Teilen hiervon, Kraftfahrzeugen im Innen- und Außenbereich, Bauwerken im Innen- und Außenbereich, Türen, Fenstern und Möbeln sowie im Rahmen der industriellen Lackierung von Kleinteilen, Coils, Container, Emballagen, elektrotechnischen Bauteilen und weißer Ware geeignet.

Insbesondere eignen sich wegen
- ihres isotropes Flopverhaltens und ihres isotropen Farborts, die beide unabhängig vom Betrachtungswinkel sind, so daß bei ihrer Verarbeitung zu Beschichtungen für dreidimensionale Gegenstände keine logistischen Probleme und keine hohen Verschnittmengen mehr auftreten,
- des hohen Deckvermögens auch in den verstreckten Bereichen der aus den erfindungsgemäßen Folien hergestellten erfindungsgemäßen Beschichtungen und
- ihres sonstigen hervorragenden anwendungstechnischen Eigenschaftsprofils, das in Glanz, Abbildungsunterscheidbarkeit, Einheitlichkeit des Deckvermögens, gleichmäßige Schichtdicke, Beständigkeit gegenüber Treibstoff, Lösemittel und Säuren, Härte, Abriebfestigkeit, Kratzfestigkeit, Schlagzähigkeit, Haftfestigkeit, Witterungsbeständigkeit und Beständigkeit gegenüber Wasser und Feuchtigkeit die sogenannte »Automobilqualität« aufweist,
hervorragend als Ersatz für die herkömmliche farb- und/oder effektgebende, mehrschichtige Basislackierung/Klarlackierung von Kraftfahrzeugkarosserien und Teilen hiervon.

Die Herstellung der erfindungsgemäßen Beschichtungen auf den dreidimensionalen Gegenstände, insbesondere auf Kraftfahrzeugkarosserien, weist keine methodischen Besonderheiten auf, sondern kann mit Hilfe der üblichen Verfahren und Vorrichtungen, wie sie beispielsweise aus den amerikanischen Patenten US 4,810,540 A, US 4,931,324 A oder US 5,114,789 A oder den europäischen Patenten EP 0 266 109 B 1, EP 0 285 071 B 1, EP 0 352 298 B 1 oder EP 0 449 982 B 1 bekannt sind, durchgeführt werden.

### Beispiel 1 und Vergleichsversuche V1 und V2

### Die Herstellung einer erfindungsgemäßen Folie (Beispiel 1) und zweier nicht erfindungsgemäßer Folien (Vergleichsversuche V1 und V2)

### Beispiel 1:

Bei dem Beispiel 1 wurde eine thermoplastische Monofolie aus ABS einer Dicke von 300 µm als permanenter Träger verwendet. Die Folie wurde auf einer kontinuierlich arbeitenden Folienbeschichtungsanlage mit einem Metallic-Wasserbasislack (Farbton: »Silbermetallic«) einseitig mit Hilfe eines Messergießers beschichtet. Dabei wurden die folgenden Parameter eingestellt:

| | |
|---|---|
| Festkörpergehalt des Wasserbasislacks | 19 Gew.-%; |
| Viskosität des Wasserbasislacks | 200 mPas (Schergefälle: 50 s⁻¹); |
| Vorschubgeschwindigkeit der Folie | 1 m/min; |
| Naßschichtdicke | 200 µm. |

Die resultierende Naßschicht wurde nach einer Abdunststrecke von 2 m mit dem gleichen Wasserbasislack überlackiert. Hierzu wurde eine pneumatisch arbeitende Sprühpistole (Devilbiss ® AGG-511) verwendet, die quer zur Vorschubrichtung der Folie über die Folienbahn hin- und her bewegt wurde. Dabei wurden die folgenden Parameter eingestellt:

| | |
|---|---|
| Fließrate | 380 cm³/min; |
| Zerstäuberluftdruck | 5 bar; |
| Abstand Düse-Film | 50 cm; |
| Vorschubgeschwindigkeit | 1 m/min |

Die resultierende Naßschicht wurde thermisch in einem 3 m langen Düsenkanal mit Warmluft (120 °C bei Lufteintritt) getrocknet. Die resultierende erfindungsgemäße Folie wurde auf eine Rolle aufgewickelt.

Zur Bestimmung der farbmetrischen Daten wurden ausgeschnittene Muster der erfindungsgemäßen Folie mit einem lösemittelhaltigen Zweikomponentenklarlack von BASF Coatings AG überlackiert. Die resultierenden Klarfackschichten wurden gemeinsam mit den effektgebenden Schichten während 30 Minuten bei 120 °C gehärtet. Die Klarlackierungen wiesen eine Trockenschichtdicke von 35 µm auf.

### Vergleichsversuch V1:

Beispiel 1 wurde wiederholt, nur daß die im ersten Verfahrenschritt erzeugte Naßschicht nicht mit dem Wasserbasislack überlackiert wurde.

### Vergleichsversuch V2:

Beispiele 1 wurde wiederholt, wobei nur eine Wasserbasislackschicht durch Spritzapplikation aufgetragen wurde.

Die Tabelle gibt einen Überblick über den Aufbau der erfindungsgemäßen Folie und der nicht erfindungsgemäßen Folien.

**Tabelle:**

| **Der Aufbau der erfindungsgemäßen Folie (Beispiel 1) und der nicht erfindungsgemäßen Folien (Vergleichsversuche V1 und V2)** | | | |
|---|---|---|---|
| **Schicht** | **Beispiel 1** | **Vergleichsversuche:** | |
| | **(µm)** | **V1** **(µm)** | **V2** **(µm)** |
| Basislackierung: | | | |
| Trockenschichtdicke: | | | |
| gegossene Schicht | 40 | 40 | - |
| gespritzte Schicht | 10 | - | 20 |
| gesamte Schicht | 50 | 40 | 20 |
| Klarlackierung: | 35 | 35 | 35 |

Die farbmetrischen Daten der Folien wurde mit Hilfe eines X-Rite-Smartscan gemessen, wobei die Meßmethode »Metalleffektlack« angewandt wurde.

Die farbmetrischen Auswertung zeigte, daß die mit dem erfindungsgemäßen Verfahren hergestellten erfindungsgemäßen Folien bezüglich Farbe, Helligkeit und Flopverhalten einer rein durch Spritzapplikation hergestellten mehrschichtigen Automobilserienlackierung (Vergleichsversuch V2) völlig entsprachen. Insbesondere wurden keine starken Anisotropien in der Helligkeit beobachtet, die im Vergleich zu den Farbinformationen die visuelle Wahrnehmung dominieren. Allerdings wies die aus der nicht erfindungsgemäßer Folie des Vergleichsversuchs V2 hergestellte Beschichtung in den verstreckten Bereichen nicht das notwendige Deckvermögen auf. Die nicht erfindungsgemäße Folie des Vergleichsversuchs V1 wies starke Anisotropien in der Helligkeit und dem Metallic-Effekt auf, die eine Verwendung als Ersatz für eine herkömmliche Automobilserienlackierung nicht gestatteten. Demgegenüber stellten die erfindungsgemäßen Folien des Beispiels 1 einen vollwertigen Ersatz für die mit Spritzapplikation hergestellten Automobilserienlackierungen vom Typ Basislackierung/Klarlackierung dar.

## Patentansprüche

1. Farb- und/oder effektgebende, ein- oder mehrschichtige Folien, die mindestens eine farb- und/oder effektgebende Schicht, enthaltend
(1) mindestens eine erste Teilschicht (1), enthaltend mindestens ein farb- und/oder effektgebendes erstes Pigment (1) und
(2) mindestens eine zweite Teilschicht (2), enthaltend das erste Pigment oder die ersten Pigmente (1) und/oder mindestens ein hiervon verschiedenes farb- und/oder effektgebendes zweites Pigment (2),
**dadurch gekennzeichnet, daß** das erste Pigment (1) oder die ersten Pigmente (1) in der ersten Teilschicht (1) anisotrop und das Pigment oder die Pigmente in der zweiten Teilschicht (2) isotrop angeordnet sind.

2. Folien nach Anspruch 1, **dadurch gekennzeichnet, daß** die Pigmente (1) und/oder (2) ein Aspektverhältnis > 1 haben.

3. Folien nach Anspruch 1 oder 2, **dadurch gekennzeichnet, daß** in der ersten Teilschicht (1) erste Pigmente (1) in einer Vorzugsrichtung ausgerichtet sind.

4. Folien nach einem der Ansprüche 1 bis 3, **dadurch gekennzeichnet, daß** die farb- und/oder effektgebende Schicht auf einen temporären oder permanenten Träger appliziert ist.

5. Folien nach Anspruch 4, **dadurch gekennzeichnet, daß** der Träger eine feste oder noch nicht verfestigte Folie ist.

6. Folien nach Anspruch 5, **dadurch gekennzeichnet, daß** die Trägerfolie aus mindestens einem thermoplastischen Kunststoff besteht.

7. Folien nach einem der Ansprüche 1 bis 6, **dadurch gekennzeichnet, daß** die farb- und/oder effektgebende Schicht mit einer Klarlackfolie verbunden ist.

8. Folien nach einem der Ansprüche 1 bis 7, **dadurch gekennzeichnet, daß** sie den Automobilaufbau aus
Elektrotauchlackierung oder Korrosionsschutzschicht,
gegebenenfalls Füllerlackierung oder Steinschlagschutzgrundierung, Basislackierung
und Klarlackierung
haben.

9. Verfahren zur Herstellung farb- und/oder effektgebender, ein- oder mehrschichtiger Folien gemäß einem der Ansprüche 1 bis 8, **dadurch gekennzeichnet, daß** man
(1) eine Teilmenge oder die Gesamtmenge mindestens eines ersten Basislacks (A) mit Hilfe eines gerichteten Applikationsverfahrens auf einen Träger appliziert, wobei sich die Applikationsvorrichtung (1) und der Träger in relativer Bewegung zueinander befinden und wodurch die erste Teilschicht (1) der farb- und/oder effektgebenden Schicht aufgebaut wird,
(2) einmal oder mindestens zweimal die Restmenge des ersten Basislacks (A) und/oder mindestens eines von dem oder den ersten Basislack(en) (A) verschiedenen zweiten Basislacks (B) auf die im ersten Verfahrensschritt (1) gebildete erste Teilschicht (1) durch mindestens ein Applikationsverfahren (2) zur isotropen Anordnung der Pigmente kontinuierlich appliziert, wobei sich die Applikationsvorrichtung(en) (2) und der Träger in relativer Bewegung zueinander befinden und wodurch die farb- und/oder effektgebende Schicht weiter oder vollständig aufgebaut wird, und
(3) die resultierende farb- und/oder effektgebende Schicht trocknet oder partiell oder vollständig aushärtet.

10. Verfahren nach Anspruch 9, **dadurch gekennzeichnet, daß** der zweite Verfahrensschritt (2) zeitlich unmittelbar nach dem ersten Verfahrensschritt (1), d. h. simultan mit dem ersten Verfahrensschritt (1), durchführbar ist.

11. Verfahren nach Anspruche 9 oder 10, **dadurch gekennzeichnet, daß** der zweite Verfahrensschritt (2) zeitlich später nach dem ersten Verfahrensschritt (1), d. h. sequentiell, durchführbar ist.

12. Verfahren nach einem der Ansprüche 9 bis 11, **dadurch gekennzeichnet, daß** die im ersten Verfahrensschritt (1) gebildete erste Teilschicht (1) mehr als 50% der Schichtdicke der farb- und/oder effektgebenden Schicht hat.

13. Verfahren nach einem der Ansprüche 9 bis 12, **dadurch gekennzeichnet, daß** die gerichteten Applikationsverfahren des ersten Verfahrensschritts (1) Gießen, Rakeln, Aufwalzen oder Extrusionsbeschichten sind.

14. Verfahren nach Anspruch 13, **dadurch gekennzeichnet, daß** die Applikationsvorrichtungen (1) Gießvorrichtungen, Rakel, Walzen oder Extruder sind.

15. Verfahren nach einem der Ansprüche 9 bis 14, **dadurch gekennzeichnet, daß** die Applikationsvorrichtungen (1) stationär sind.

16. Verfahren nach einem der Ansprüche 9 bis 15, **dadurch gekennzeichnet, daß** die erste Teilschicht (1) vor dem zweiten Verfahrensschritt (2) abgelüftet wird.

17. Verfahren nach einem der Ansprüche 9 bis 16, **dadurch gekennzeichnet, daß** der Verbund aus Träger und erster Teilschicht (1) vor dem zweiten Verfahrensschritt (2) aufgewickelt wird.

18. Verfahren nach einem der Ansprüche 9 bis 17, **dadurch gekennzeichnet, daß** der Verbund aus Träger, erster Teilschicht (1) und zweiter Teilschicht (2) vor dem weiteren zweiten Verfahrensschritt (2) aufgewickelt wird.

19. Verfahren nach einem der Ansprüche 9 bis 17, **dadurch gekennzeichnet, daß** die im zweiten Verfahrensschritt (2) gebildete Schicht die vollständige farb- und/oder effektgebende zweite Teilschicht (2) ist.

20. Verfahren nach einem der Ansprüche 9 bis 19, **dadurch gekennzeichnet, daß** die Applikationsverfahren (2) Spritzapplikationsverfahren und die Applikationsvorrichtungen (2) Spritzapplikationsvorrichtungen sind.

21. Verfahren nach Anspruch 20, **dadurch gekennzeichnet, daß** die Spritzapplikationsvorrichtungen (2) elektrostatische oder pneumatische Vorrichtungen sind.

22. Verfahren nach einem der Ansprüche 9 bis 21, **dadurch gekennzeichnet, daß** die Applikationsvorrichtung(en) (2) unmittelbar hinter der Applikationsvorrichtung (1) angeordnet ist oder sind.

23. Verfahren nach einem der Ansprüche 9 bis 22, **dadurch dadurch gekennzeichnet, daß** die Applikationsvorrichtung(en) (2) stationär angeordnet ist oder sind.

24. Verfahren nach Anspruch 23, **dadurch gekennzeichnet, daß** die stationären Applikationsvorrichtung(en) (2) quer und/oder schräg zur Bewegungsrichtung des Verbunds aus Träger und erster Teilschicht (1) sowie gegebenenfalls zweiter Teilschicht (2) angeordnet ist oder sind.

25. Verfahren nach einem der Ansprüche 9 bis 22, **dadurch gekennzeichnet, daß** die Applikationsvorrichtung(en) (2) quer und/oder schräg zur Bewegungsrichtung des Verbunds aus Träger und erster Teilschicht (1) sowie gegebenenfalls zweiter Teilschicht (2) hin und her beweglich angeordnet ist oder sind.

26. Verfahren nach einem der Ansprüche 9 bis 25, **dadurch gekennzeichnet, daß** die Applikationsvorrichtung(en) (2) in der Vertikalen beweglich ist oder sind.

27. Verfahren nach einem der Ansprüche 9 bis 26, **dadurch gekennzeichnet, daß** die Applikationsrichtung(en) der Applikationsvorrichtung(en) (2) senkrecht und/oder schräg zur Ebene des Verbunds aus Träger und erster Teilschicht (1) sowie gegebenenfalls zweiter Teilschicht (2) ist oder sind.

28. Verfahren nach Anspruch 27, **dadurch gekennzeichnet, daß** die Applikationsrichtung(en) in und/oder entgegen der Bewegungsrichtung des Verbunds aus Träger und erster Teilschicht (1) sowie gegebenenfalls zweiter Teilschicht (2) ausgerichtet ist oder sind.

29. Verfahren nach einem der Ansprüche 20 bis 28, **dadurch gekennzeichnet, daß** die von den Applikationsvorrichtung(en) (2) erzeugten Basislacksprühstrahlwolken überlappen.

30. Verfahren nach einem der Ansprüche 21 bis 29, **dadurch gekennzeichnet, daß** die pneumatisch erzeugte(n) Basislacksprühstrahlwolke(n) relativ zu ihrer Sprührichtung und relativ zum Träger in eine periodische Bewegung versetzt ist oder sind.

31. Verfahren nach einem der Ansprüche 9 bis 30, **dadurch gekennzeichnet, daß** die farb- und/oder effektgebende Schicht mit einer Klarlackfolie oder einer Klarlackierung verbunden wird.

32. Verfahren nach einem der Ansprüche 9 bis 31, **dadurch gekennzeichnet, daß** der Verbund aus Träger und farb- und/oder effektgebender Schicht auf Rollen aufgewickelt wird.

33. Verfahren nach einem der Ansprüche 9 bis 32, **dadurch gekennzeichnet, daß** die farb- und/oder effektgebende Schicht vom Träger abgelöst wird.

34. Verwendung der Folien gemäß einem der Ansprüche 1 bis 8 zur dekorativen und/oder schützenden Beschichtung von Kraftfahrzeugkarosserien und Teilen hiervon, Kraftfahrzeugen im Innen- und Außenbereich, Bauwerken im Innen- und Außenbereich, Türen, Fenstern und Möbeln sowie im Rahmen der industriellen Lackierung von Kleinteilen, Coils, Container, Emballagen, elektrotechnischen Bauteilen und weißer Ware.

35. Verwendung nach Anspruch 34, **dadurch gekennzeichnet, daß** die Folien als farb- und/oder effektgebende, mehrschichtige Basislackierung/Klarlackierung von Kraftfahrzeugkarosserien und Teilen hiervon verwendet werden.

## Claims

1. A single-layer or multilayer color and/or effect film which consists of or comprises at least one color and/or effect layer comprising
(1) at least one component layer (1) comprising at least one color and/or effect first pigment (1) and
(2) at least one second component layer (2) comprising the first pigment or first pigments (1) and/or therefrom at least one different color and/or effect second pigment (2),
wherein the first pigment (1) or first pigments (1) are arranged anisotropically in the first component layer (1) and the pigment or pigments are arranged isotropically in the second component layer (2).

2. The film according to claim 1, wherein the pigments (1) and/or (2) have an aspect ratio > 1.

3. The film according to claim 1 or 2, wherein first pigments (1) in first component layer (1) are aligned in a preferential direction.

4. The film according to any of claims 1 to 3, wherein the color and/or effect layer is applied to a temporary or permanent carrier.

5. The film according to claim 4, wherein the carrier is a solid film or a film which is not yet solidified.

6. The film according to claim 5, wherein the carrier film is composed of at least one thermoplastic.

7. The film according to any of claims 1 to 6, wherein the color and/or effect layer is joined to a clearcoat film.

8. The film according to any of claims 1 to 7, which has the automotive construction comprising
electrocoat or anticorrosion layer,
primer-surfacer coat or antistonechip primer, if desired,
basecoat,
and clearcoat.

9. A process for preparing a single-layer or multilayer color and/or effect film according to any of claims 1 to 8, which comprises
(1) applying a component amount or the total amount of at least one basecoat material (A) by means of a directed application technique to a carrier, the applicator (1) and the carrier being in relative motion with respect to one another, to construct the first component layer (1) of the color and/or effect layer,
(2) once, or at least twice, continuously applying the remainder of the first basecoat material (A) and/or at least one second basecoat material (B), which is different than the first basecoat(s) (A), to the first component layer (1), formed in first step (1), by at least one application technique (2) to the isotropic arrangement of the pigments, the applicator(s) (2) and the carrier being in relative motion with respect to one another, to further or fully construct the color and/or effect layer, and
(3) drying or partly or fully curing the resulting color and/or effect layer.

10. The process according to claim 9, wherein second step (2) can be carried out in time immediately after first step (1), i.e., simultaneously with first step (1).

11. The process according to claim 9 or 10, wherein second step (2) can be carried out in time later after first step (1), i.e., sequentially.

12. The process according to any of claims 9 to 11, wherein the first component layer (1) formed in first step (1) has more than 50% of the thickness of the color and/or effect layer.

13. The process according to any of claims 9 to 12, wherein the directed application techniques of first step (1) are casting, knife coating, roller application or extrusion coating.

14. The process according to claim 13, wherein the applicators (1) are casting devices, knife coaters, rollers or extruders.

15. The process according to any of claims 9 to 14, wherein the applicators (1) are stationary.

16. The process according to any of claims 9 to 15, wherein the first component layer (1) is vented before second step (2).

17. The process according to any of claims 9 to 16, wherein the assembly comprising carrier and first component layer (1) is wound up before second step (2).

18. The process according to any of claims 9 to 17, wherein the assembly comprising carrier, first component layer (1) and second component layer (2) is wound up before the further second step (2).

19. The process according to any of claims 9 to 17, wherein the layer formed in the second step (2) is the complete color and/or effect second component layer (2).

20. The process according to any of claims 9 to 19, wherein the application techniques (2) are spray application techniques and the applicators (2) are spray applicators.

21. The process according to claim 20, wherein the spray applicators (2) are electrostatic or pneumatic devices.

22. The process according to any of claims 9 to 21, wherein the applicator(s) (2) is or are arranged directly downstream of the applicator (1).

23. The process according to any of claims 9 to 22, wherein the applicator(s) (2) is or are arranged stationarily.

24. The process according to claim 23, wherein the stationary applicator(s) (2) is or are arranged transversely and/or obliquely to the direction of motion of the assembly comprising carrier and first component layer (1) and also, where appropriate, first component layer (2).

25. The process according to any of claims 9 to 22, wherein the applicator(s) (2) is or are arranged in such a way as to be movable backward and forward transversely and/or obliquely to the direction of motion of the assembly comprising carrier and first component layer (1) and also, where appropriate, second component layer (2).

26. The process according to any of claims 9 to 25, wherein the applicator(s) (2) is or are movable in the vertical plane.

27. The process according to any of claims 9 to 26, wherein the application direction (s) of the applicator(s) (2) is or are vertical and/or oblique with respect to the plane of the assembly comprising carrier and first component layer (1) and also, where appropriate, second component layer (2).

28. The process according to claim 27, wherein the application direction(s) is or are aligned in and/or against the direction of motion of the assembly comprising carrier and first component layer (1) and also, where appropriate, second component layer (2).

29. The process according to any of claims 20 to 28, wherein the basecoat spray jet clouds produced by the applicator(s) (2) overlap.

30. The process according to any of claims 21 to 29, wherein the pneumatically produced basecoat spray jet cloud(s) is or are set in periodic motion relative to its or their spraying direction and relative to the carrier.

31. The process according to any of claims 9 to 30, wherein the color and/or effect layer is joined to a clearcoat film or to a clearcoat.

32. The process according to any of claims 9 to 31, wherein the assembly comprising carrier and color and/or effect layer is wound up onto rolls.

33. The process according to any of claims 9 to 32, wherein the color and/or effect layer is detached from the carrier.

34. The use of the film according to any of claims 1 to 8 for the decorative and/or protective coating of motor vehicle bodies and parts thereof, the interior and exterior of motor vehicles, the inside and outside of buildings, doors, windows, furniture, and also in the context of the industrial coating of small parts, coils, containers, packaging, electrical components, and white goods.

35. The use according to claim 34, wherein the films are used as a multilayer color and/or effect basecoat/clearcoat system of coating motor vehicle bodies and parts thereof.

## Revendications

1. Feuilles monocouches ou multicouches, colorantes et/ou à effets, qui contiennent au moins une couche colorante et/ou à effets, contenant
(1) au moins une première couche partielle (1), contenant au moins un premier pigment (1) colorant et/ou à effets, et
(2) au moins une deuxième couche partielle (2), contenant le premier pigment ou les premiers pigments (1), et/ou au moins un deuxième pigment (2), colorant et/ou à effets, différent du premier,
**caractérisées en ce que** le premier pigment (1) ou les premiers pigments (1) de la première couche partielle (1) sont disposés d'une manière anisotrope, et le pigment ou les pigments de la deuxième couche partielle (2) sont disposés d'une manière isotrope.

2. Feuilles selon la revendication 1, **caractérisées en ce que** les pigments (1) et/ou (2) ont un rapport d'aspect > 1.

3. Feuilles selon la revendication 1 ou 2, **caractérisées en ce que**, dans la première couche partielle (1), les premiers pigments (1) sont orientés dans une direction préférentielle.

4. Feuilles selon l'une des revendications 1 à 3, **caractérisées en ce que** la couche colorante et/ou à effets est appliquée sur un support temporaire ou permanent.

5. Feuilles selon la revendication 4, **caractérisées en ce que** le support est une feuille solide ou non encore solidifiée.

6. Feuilles selon la revendication 5, **caractérisées en ce que** la feuille support est constituée d'au moins un matériau thermoplastique.

7. Feuilles selon l'une des revendications 1 à 6, **caractérisées en ce que** la couche colorante et/ou à effets est combinée à une feuille formant vernis transparent.

8. Feuilles selon l'une des revendications 1 à 7, **caractérisées en ce qu'**elles ont la structure d'un système de peinture pour carrosserie automobile, constitué
d'une peinture appliquée par électrophorèse ou d'une couche de protection contre la corrosion,
éventuellement d'un apprêt garnissant ou d'une couche de fond à effet pare-pierres,
d'un vernis de base,
et d'un vernis transparent.

9. Procédé de fabrication de feuilles monocouches ou multicouches, colorantes et/ou à effets, selon l'une des revendications 1 à 8, **caractérisé en ce que**
(1) on applique une partie ou la totalité d'au moins un premier vernis de base (A) sur un support, à l'aide d'un procédé d'application ciblé, le dispositif d'application (1) et le support étant en déplacement relatif l'un par rapport à l'autre, ce qui va donner la première couche partielle (1) de la couche colorante et/ou à effets,
(2) on applique en continu, une fois ou au moins deux fois, le reste du premier vernis de base (A) et/ou au moins un deuxième vernis de base (B), différent du premier ou des premiers vernis de base (A), sur la première couche partielle (1) formée dans la première étape (1), par au moins une opération d'application (2), pour assurer une disposition isotrope des pigments, ce à l'occasion de quoi le ou les dispositifs d'application (2) et le support sont en déplacement relatif l'un par rapport à l'autre, ce qui va poursuivre ou parachever la constitution de la couche colorante et/ou à effets, et
(3) on sèche, ou on durcit partiellement ou complètement, la couche colorante et/ou à effets ainsi obtenue.

10. Procédé selon la revendication 9, **caractérisé en ce que** la deuxième étape (2) peut être mise en oeuvre dans le temps immédiatement après la première étape (1), c'est-à-dire simultanément avec la première étape (1).

11. Procédé selon les revendications 9 ou 10, **caractérisé en ce que** la deuxième étape (2) peut être mise en oeuvre dans le temps ultérieurement à la première étape (1), c'est-à-dire successivement.

12. Procédé selon l'une des revendications 9 à 11, **caractérisé en ce que** la première couche partielle (1) formée dans la première étape (1) présente une épaisseur de couche supérieure à 50 % de l'épaisseur de la couche colorante et/ou à effets.

13. Procédé selon l'une des revendications 9 à 12, **caractérisé en ce que** les procédés d'application ciblés de la première étape (1) sont la coulée, l'application à la racle, l'application au rouleau ou l'enduction par extrusion.

14. Procédé selon la revendication 13, **caractérisé en ce que** les dispositifs d'application (1) sont des dispositifs de coulée, des racles, des rouleaux ou des extrudeuses.

15. Procédé selon l'une des revendications 9 à 14, **caractérisé en ce que** les dispositifs d'application (1) sont fixes.

16. Procédé selon l'une des revendications 9 à 15, **caractérisé en ce que** la première couche partielle (1) est évaporée avant la deuxième étape (2).

17. Procédé selon l'une des revendications 9 à 16, **caractérisé en ce que** le composite constitué du support et de la première couche partielle (1) est enroulé avant la deuxième étape (2).

18. Procédé selon l'une des revendications 9 à 17, **caractérisé en ce que** le composite constitué du support, de la première couche partielle (1) et de la deuxième couche partielle (2), est enroulé avant la deuxième étape (2) suivante.

19. Procédé selon l'une des revendications 9 à 17, **caractérisé en ce que** la couche formée dans la deuxième étape (2) représente la totalité de la deuxième couche partielle (2) colorante et/ou à effets.

20. Procédé selon l'une des revendications 9 à 19, **caractérisé en ce que** les procédés d'application (2) sont des procédés d'application par pistolage, et les dispositifs d'application (2) sont des dispositifs d'application par pistolage.

21. Procédé selon la revendication 20, **caractérisé en ce que** les dispositifs d'application par pistolage (2) sont des dispositifs électrostatiques ou pneumatiques.

22. Procédé selon l'une des revendications 9 à 21, **caractérisé en ce que** le ou les dispositifs d'application (2) sont disposés immédiatement en arrière du dispositif d'application (1).

23. Procédé selon l'une des revendications 9 à 22, **caractérisé en ce que** le ou les dispositifs d'application (2) sont disposés d'une manière fixe.

24. Procédé selon la revendication 23, **caractérisé en ce que** le ou les dispositifs d'application fixes (2) sont disposés perpendiculairement et/ou obliquement par rapport à la direction de déplacement du composite constitué du support et de la première couche partielle (1) et éventuellement de la deuxième couche partielle (2).

25. Procédé selon l'une des revendications 9 à 22, **caractérisé en ce que** le ou les dispositifs d'application (2) sont disposés de façon à pouvoir se déplacer dans un sens et dans l'autre perpendiculairement et/ou obliquement par rapport à la direction de déplacement du composite constitué du support et de la première couche partielle (1) et éventuellement de la deuxième couche partielle (2).

26. Procédé selon l'une des revendications 9 à 25, **caractérisé en ce que** le ou les dispositifs d'application (2) sont mobiles dans la direction verticale.

27. Procédé selon l'une des revendications 9 à 26, **caractérisé en ce que** le ou les directions d'application du ou des dispositifs d'application (2) sont perpendiculaires et/ou obliques par rapport au plan du composite constitué du support et de la première couche partielle (1) et éventuellement de la deuxième couche partielle (2).

28. Procédé selon la revendication 27, **caractérisé en ce que** le ou les dispositifs d'application sont orientés dans la direction de déplacement du composite constitué du support et de la première couche partielle (1) et éventuellement de la deuxième couche partielle (2), et/ou dans la direction opposée.

29. Procédé selon l'une des revendications 20 à 28, **caractérisé en ce que** les brumes de vaporisation du vernis de base produites par le ou les dispositifs d'application (2) se chevauchent.

30. Procédé selon l'une des revendications 21 à 29, **caractérisé en ce que** la ou les brumes de vaporisation du vernis de base produites par un procédé pneumatique sont décalées, selon un déplacement périodique, par rapport à leur direction de vaporisation, et par rapport au support.

31. Procédé selon l'une des revendications 9 à 30, **caractérisé en ce que** la couche colorante et/ou à effets est combinée à une feuille formant vernis transparent, ou à un vernis transparent.

32. Procédé selon l'une des revendications 9 à 31, **caractérisé en ce que** le composite constitué du support et de la couche colorante et/ou à effets est enroulé sur des cylindres.

33. Procédé selon l'une des revendications 9 à 32, **caractérisé en ce qu'**on détache du support la couche colorante et/ou à effets.

34. Utilisation des feuilles selon l'une des revendications 1 à 8 pour le revêtement décoratif et/ou protecteur de carrosseries automobiles et de pièces de ces dernières, de véhicules à moteur en intérieur et en extérieur, d'ouvrages de construction en intérieur et en extérieur, de portes, fenêtres et meubles, ainsi que dans le cadre du laquage industriel des petites pièces, des bandes, des récipients, des emballages, des composants électrotechniques et des produits blancs.

35. Utilisation selon la revendication 34, **caractérisée en ce que** les feuilles sont utilisées en tant que vernis de base/vernis transparent multicouche, colorant et/ou à effets, de carrosseries de véhicules à moteur et de pièces de ces dernières.
